(19) Europäisches Patentamt
European Patent Office
Office européen des brevets

(11) **EP 2 790 804 B1**

(12) **EUROPEAN PATENT SPECIFICATION**

(45) Date of publication and mention
of the grant of the patent:
**16.10.2019 Bulletin 2019/42**

(21) Application number: **11811226.7**

(22) Date of filing: **16.12.2011**

(51) Int Cl.:
**B01D 3/20** *(2006.01)*    **B01D 3/00** *(2006.01)*
**F25J 3/04** *(2006.01)*

(86) International application number:
**PCT/US2011/065475**

(87) International publication number:
**WO 2013/089774 (20.06.2013 Gazette 2013/25)**

(54) **LIQUID DISTRIBUTOR WITH A MIXER**

FLÜSSIGKEITSVERTEILER MIT EINEM MISCHER

DISTRIBUTEUR DE LIQUIDE AVEC MÉLANGEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.10.2014 Bulletin 2014/43**

(73) Proprietor: **Air Products and Chemicals, Inc.
Allentown, PA 18195-1501 (US)**

(72) Inventors:
• **SUNDER, Swaminathan
Allentown, Pennsylvania 18104 (US)**

• **HERRON, Donn, Michael
Fogelsville, Pennsylvania 18051 (US)**
• **HOUGHTON, Patrick, Alan
Emmaus, Pennsylvania 18049 (US)**

(74) Representative: **Beck Greener LLP
Fulwood House
12 Fulwood Place
London WC1V 6HR (GB)**

(56) References cited:
**EP-A1- 1 323 467    DE-B- 1 113 680
US-A- 2 804 292    US-B1- 6 338 774**

EP 2 790 804 B1

**Description**

BACKGROUND

The apparatus and methods according to the present disclosure relate to devices and methods for mixing and distributing liquid descending in exchange columns for heat and/or mass transfer processes. The apparatus and methods have particular application in cryogenic air separation processes utilizing distillation, although the apparatus and methods also may be used in other heat and/or mass transfer processes that use packing (*e.g.*, random or structured packing). Also described herein are methods for assembling devices for mixing and distributing liquid descending in exchange columns.

As used herein, the term "column" (or "exchange column") means a distillation or fractionation column *i.e.*, a column where liquid and vapor phases are countercurrently contacted to effect separation of a fluid mixture, such as by contacting of the vapor and liquid phases on packing elements (in a "packed column") or on a series of vertically-spaced trays or plates mounted within the column.

Cryogenic separation of air is carried out in distillation columns wherein liquid and vapor mixtures are brought into intimate contact with each other. In each distillation column a vapor phase of the mixture ascends with an ever increasing concentration of the more volatile components (*e.g.*, nitrogen) while a liquid phase of the mixture descends with an ever increasing concentration of the less volatile components (*e.g.*, oxygen). Various means, such as packings or trays, may be used to bring the liquid and vapor phases of the mixture into contact to accomplish mass transfer between the phases.

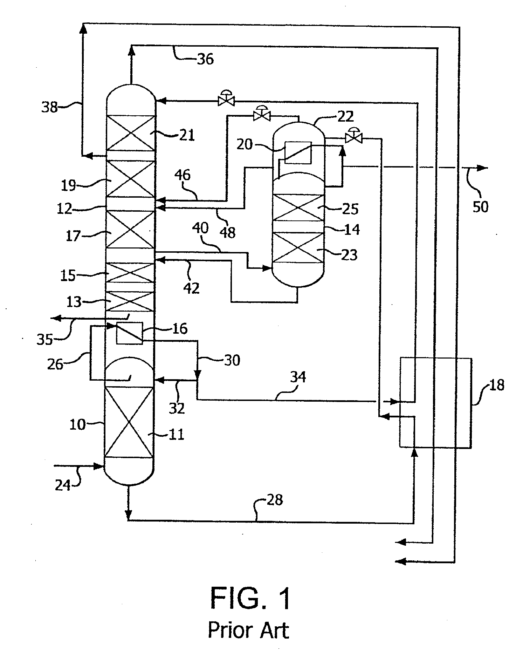

There are many process cycles for the cryogenic separation of air into its main components, namely nitrogen, oxygen, and argon. A typical process known as the double column cycle is shown schematically in Figure 1. Only the distillation columns and the associated cryogenic heat exchangers are shown in this schematic illustration for brevity. The double column cycle includes a high pressure column 10, a low pressure column 12, an argon column 14, a main reboiler condenser 16, a sub-cooler 18, an argon condenser 20, and an argon condenser can 22.

High pressure feed air 24 at about 4.5-5.5 bara pressure and near its dew point is fed into the base of the high pressure column 10. Within the high pressure column 10, the air is separated into nitrogen-enriched vapor 26 and oxygen-enriched liquid 28. The oxygen-enriched liquid 28 is subcooled in the sub-cooler 18, let down in pressure to about 1.2-1.4 bara and fed into the argon condenser can 22. The nitrogen-enriched vapor 26 is passed into the main reboiler-condenser 16 where it is condensed against boiling oxygen, which provides boilup to the low pressure column 12. The condensed nitrogen-enriched liquid 30 is partly used as reflux 32 for the high pressure column 10 and partly used as reflux 34 for the low pressure column 12 after subcooling the latter in sub-cooler 18 and letting it down in pressure to about 1.2-1.4 bara. In the low pressure column 12, the various feeds are separated by cryogenic distillation into oxygen-rich and nitrogen-rich components.

Gaseous oxygen product 35, also known as GOX, is withdrawn from the bottom of the low pressure column 12 and gaseous nitrogen product 36, also known as LPGAN, is withdrawn from the top of the low pressure column 12 and warmed through the sub-cooler 18 before being fed to other parts of the plant. A waste stream 38 is also withdrawn from an intermediate location in the low pressure column 12, warmed through the sub-cooler 18 and fed to other parts of the plant.

A vapor phase side-stream 40 is withdrawn from another intermediate location in the low pressure column 12 and fed to the bottom of the argon column 14 where, after flowing up the argon column 14 and condensing, it returns as a liquid stream 42, which is fed back into the low pressure column 12. The refrigeration for the argon condenser 20 is provided by partial evaporation of stream 28 in the argon condenser can 22, from where it is fed partly as vapor 46 and partly as liquid 48 to the low pressure column. Part of the vapor at the top of the argon column 14 is withdrawn as crude argon 50, also known as CGAR, and fed to other parts of the plant for further processing.

In each of the distillation columns, separation is accomplished in one or more sections, such as section 11 in the high pressure column 10, sections 13, 15, 17, 19, and 21 in the low pressure column 12, and sections 23 and 25 in the argon column 14. While different types of contact means, such as trays or packing, may be used, in the Examples, the contact means are all assumed to be made of structured packing and are shown as such.

There are many devices for distributing liquid flow uniformly over a packed section of a packed column. Such devices are disclosed in various patents and textbooks. For example, there are trough-style distributors with multiple parallel regions wherein liquid collects and flows through an array of perforations to the packing below. The liquid troughs may be laid out uniformly over the column cross section and may be fed by a central channel that runs perpendicular to the troughs and which itself may cover a major portion of the column diameter. In large columns, the liquid troughs also may be connected near the wall through an annular gutter, which may be a means for equalizing hydraulic gradients. Vapor flows in parallel regions in between the liquid troughs in generally rectangular risers. The vapor regions may have caps placed over them to prevent the liquid from the section above from falling through them and instead to channel the liquid into the troughs which collect and convey the liquid to the column section below. Such distributors may be referred to as chimney style distributors. There also are pan style distributors wherein vapor risers may be generally circular in cross section and the liquid flows around them and through perforations to the packing below. Thus, there are many basic designs and numerous variations on the basic design.

Initial presentation of liquid and vapor to the packing in a column is made by such distributors. A liquid distributor, the role of which is to irrigate the packing substantially uniformly with liquid, is located above the packing, while a vapor distributor, the role of which is to create substantially uniform vapor flow below the packing, is located below the packing. In addition to the vapor distributor, a liquid collector also is located below the packing, the role of which is to collect the liquid leaving the packing and direct the liquid further down the column. It is common for the liquid collector and the vapor distributor to be encompassed in the same device, which performs both roles.

Traditionally, there have only been a few distributors that have dealt with mixing, either independently or in combination with liquid flow distribution. These devices do not perform well in terms of their liquid composition and flow distribution quality, especially for large cryogenic distillation columns of an air separation plant having diameters greater than about 2 meters, because the devices do not provide for complete mixing (but rather only partial mixing) and uniform distribution of liquid to a packed column to achieve high separation efficiency, as do the apparatus and method according to the present disclosure. The reliability of packed columns also is improved by the apparatus and methods according to the present disclosure, which protect the packed columns from manufacturing debris and operating debris by using filters.

Various types of devices have been used in packed columns or mass transfer columns, where such devices perform, at least in part, one or more of the following functions with respect to liquid descending in a column: collection, distribution, redistribution, and mixing. However, for various reasons, these devices do not completely mix the liquid and therefore do not provide uniformity in both flow and composition of the liquid. For example, such devices are disclosed in U.S. Pat. No. 5,158,713 (Ghelfi, et al.); U.S. Pat. Nos. 5,776,316 (Potthoff, et al.); 5,752,538 (Billingham, et al.); 5,935,389 (Hine, et al.); and 7,114,709 (Ender, et al.). See also the liquid collector and redistributor disclosed in U.S. Pat. App. Pub. No. US 2009/0049864 (Kovak, et al.). Other examples of such devices include the devices disclosed in U.S. Pat. Nos. 5,240,652 (Taylor, et al.); 5,897,748 (Kaibel); 6,086,055 (Armstrong, et al.); and 7,007,932 (Armstrong, et al.). EP1323467A1 (Manteufel) describes a device for the exchange of material and/or energy in a wash column in which a distributor head distributes liquids uniformly through the system. DE1113680 (Schwanitz) describes an apparatus for liquid redistribution in nonfixed packed columns

BRIEF SUMMARY

There are various aspects of the apparatus and methods according to the present disclosure, and many variations of each aspect.

One aspect is an apparatus for distributing a flow of a liquid descending in an inner space of a packed column. The apparatus includes a collector, a mixer, at least two conduits, a predistributor, and a final distributor. The collector is disposed in the inner space of the packed column and is adapted to collect at least a portion of the flow of the liquid descending in the inner space of the packed column. The mixer is below and vertically spaced apart from the collector in the inner space of the packed column. The mixer is disposed in the inner space of the packed column and is adapted to receive and mix at least a portion of the liquid collected on the collector. The at least two conduits have a first end in fluid communication with the collector and a second end in fluid communication with the mixer. The conduits are adapted to receive and transmit downward at least a portion of the liquid from the collector to the mixer. The inlets of the at least two conduits are symmetrically located in the collector and the outlets of the at least two conduits are symmetrically located in the mixer, the conduit inlets dividing the collector into symmetric sectors and the conduit outlets dividing the mixer into symmetric zones. A geometric center of the first sector of the collector is positioned circumferentially away from a geometric center of the first zone of the mixer such that liquid transmitted through a first conduit is circumferentially transposed from the first sector of the collector to the first zone of the mixer and a geometric center of a second sector of the collector is positioned circumferentially away from a geometric center of a second zone of the mixer such that liquid transmitted through a second conduit is circumferentially transposed from the second sector of the collector to the second zone of the.

In a first variation of the apparatus, the geometric center of the first sector of the collector is positioned circumferentially away from the geometric center of the first zone of the mixer by about 60° to about 180°, and preferably by about 120° to about 180°, and most preferably by about 180°.

In a variation of the first variation of the apparatus, the geometric center of the second sector of the collector is positioned circumferentially away from the geometric center of the second zone of the mixer by about 60° to about 180°, and preferably about 120° to about 180°, and most preferably by about 180°.

The cross-sectional area of the mixer occupies no more than about 25%, and preferably no more than about 20%, of a cross-sectional area of the inner space of the packed column.

In a further variation of the apparatus, the apparatus comprises two conduits dividing the collector into two symmetric sectors and the mixer into two symmetric zones. In another variation of the apparatus, the apparatus comprises four conduits dividing the collector into four symmetric sectors and the mixer into four symmetric zones.

The predistributor is disposed in the inner space of the packed column and is adapted to receive at least a portion of a flow of a mixed liquid from the mixer and to transmit at least a part of the received flow of the mixed liquid outwardly from the predistributor.

The final distributor is disposed in the inner space of the packed column and is adapted to receive at least a portion of a flow of a predistributed liquid from the predistributor and to transmit at least a portion of the received flow of the predistributed liquid substantially uniformly over at least a portion of a cross-sectional area of the inner space of the packed column.

In a further variation of the apparatus, the predistributor includes a plurality of channels adapted to transmit downward at least part of the received flow of the mixed liquid. In addition, the final distributor includes a plurality of troughs adapted to transmit at least part of the flow of the predistributed liquid. Each trough has at least one aperture and is in fluid communication with at least one channel of the predistributor.

A second apparatus is similar to the first apparatus or any of the variations thereof discussed above, but also includes a filter. In a variation of any of those apparatus or variations thereof, the filter is disposed in the mixer.

Yet another aspect described herein is a method for assembling an apparatus for distributing a flow of a liquid descending in an inner space of a packed column, which method for assembling includes five steps. The first step is to provide the packed column having the inner space. The second step is to provide in the inner space of the packed column a collector having a plurality of sectors and adapted to collect at least a portion of the flow of the liquid descending in the inner space of the packed column. The third step is to provide in the inner space of the packed column a mixer below and vertically spaced apart from the collector, the mixer having a plurality of zones disposed in the inner space of the packed column and adapted to receive and mix at least a portion of the liquid collected on the collector. The fourth step is to provide a first conduit having a first end in fluid communication with a first sector of the collector and a second end in fluid communication with a first zone of the mixer, the first conduit adapted to receive and transmit downward at least a portion of the liquid from the first sector of the collector to the first zone of the mixer. The fifth step is to provide a second conduit having a first end in fluid communication with a second sector of the collector and a second end in fluid communication with a second zone of the mixer, the second conduit adapted to receive and transmit downward at least a portion of the liquid from the second sector of the collector to the second zone of the mixer. The inlets of the conduits are symmetrically located in the collector and the outlets of the at least two conduits are symmetrically located in the mixer, the conduit inlets dividing the collector into symmetric sectors and the conduit outlets dividing the mixer into symmetric zones. At least one of a geometric center of the first sector of the collector is positioned circumferentially away from a geometric center of the first zone of the mixer and a geometric center of the second sector of the collector is positioned circumferentially away from a geometric center of the second zone of the mixer.

In a first variation of the method for assembling, the geometric center of the first sector of the collector is positioned circumferentially away from the geometric center of the first zone of the mixer by about 60° to about 180°, and preferably by about 120° to about 180°, and most preferably by about 180°.

In a variation of the first variation of the method for assembling, the geometric center of the second sector of the collector is positioned circumferentially away from the geometric center of the second zone of the mixer by about 60° to about 180°, and preferably by about 120° to about 180°, and most preferably by about 180°.

The cross-sectional area of the mixer occupies no more than about 25%, and preferably no more than about 20%, of a cross-sectional area of the inner space of the packed column.

A further step is to provide in the inner space of the packed column a predistributor adapted to receive at least a portion of a flow of a mixed liquid from the mixer and to transmit at least a part of the received flow of the mixed liquid outwardly from the predistributor.

Another further step is to provide in the inner space of the packed column a final distributor adapted to receive at least a portion of the flow of a predistributed liquid from the predistributor and to transmit at least a portion of the received flow of the predistributed liquid substantially uniformly over at least a portion of a cross-sectional area of the inner space of the packed column.

In a variation of the method for assembling, the predistributor includes a plurality of channels adapted to transmit downward at least part of the received flow of the mixed liquid. In addition, the final distributor includes a plurality of troughs adapted to transmit at least part of the flow of the predistributed liquid, each trough having at least one aperture and being in fluid communication with at least one channel of the predistributor.

A further method for assembling an apparatus is similar to the first method for assembling or any variations thereof discussed above, but includes the further step of providing a filter. In a variation of any of those methods for assembling or variations thereof, the filter is disposed in the mixer.

Another aspect is a process for cryogenic air separation, which includes contacting an ascending vapor and a descending liquid counter-currently in a packed column having an inner space with a first mass transfer section in the inner space and a second mass transfer section below and spaced apart from the first mass transfer section in the inner space. In this process, an apparatus, such as any of the apparatus discussed above, or any variations thereof, is positioned between the first mass transfer section and the second mass transfer section, and distributes a flow of the descending liquid from the first mass transfer section to the second mass transfer section.

Yet another aspect is a method for distributing a flow of a liquid descending in an inner space of a packed column using the apparatus of the first aspect. The first step is to introduce into the inner space of the packed column above a collector disposed in the inner space the flow of the liquid descending in the inner space of the packed column. The second step is to collect on the collector at least a portion of the flow of the liquid descending in the inner space of the packed column. The third step is to transmit downward through a first conduit in fluid communication with the collector at least a portion of the liquid from a first sector of the collector to a first zone of the mixer disposed in the inner space below and spaced apart from the collector, whereby the liquid transmitted through the first conduit is circumferentially transposed from the first sector of the collector to first zone of the mixer. The fourth step is to transmit downward through a second conduit in fluid communication with the collector at least a portion of the liquid from a second sector of the collector to a second zone of the mixer, whereby the liquid transmitted by the second conduit is circumferentially transposed from the second sector of the collector to the second zone of the mixer. The fifth step is to mix in the mixer the liquid transmitted to the first zone of the mixer from the first sector of the collector with the liquid transmitted to the second zone of the mixer from the second sector of the collector, thereby producing a mixed liquid. A further step is to transmit from the mixer to a predistributor disposed in the inner space of the packed column at least a portion of the flow of the mixed liquid. A further step is to transmit outwardly from the predistributor at least the part of the received flow of the mixed liquid received from the mixer. Another further step is to receive by a final distributor disposed in the inner space of the packed column at least a portion of the flow of the predistributed liquid from the predistributor. Another further step is to transmit at least a portion of the received flow of the predistributed liquid substantially uniformly over at least a portion of the cross-sectional area of the inner space of the packed column.

In a first variation of this method, the liquid transmitted through the first conduit is circumferentially transposed from the first sector of the collector to the first zone of the mixer by about 60° to about 180°, preferably by about 120° to about 180°, and most preferably by about 180°.

In a variation of the first variation of this method, the liquid transmitted through the second conduit is circumferentially transposed from the second sector of the collector to the second zone of the mixer by about 60° to about 180°, and preferably by about 120° to about 180°, and most preferably by about 180°.

The cross-sectional area of the mixer occupies no more than about 25%, and preferably no more than about 20%, of a cross-sectional area of the inner space of the packed column.

In a variation of the method, the predistributor includes a plurality of channels adapted to transmit downward at least part of the received flow of the mixed liquid. In addition, the final distributor includes a plurality of troughs adapted to transmit at least part of the flow of the predistributed liquid, each trough having at least one aperture and being in fluid communication with at least one channel of the predistributor.

A second method is similar to the first method or any variations thereof discussed above, but includes two additional steps. The first additional step is to provide a filter. The second additional step is to filter at least a portion of the liquid. In a variation of any of those methods or variations thereof, the filter is disposed in the mixer.

BRIEF DESCRIPTION OF THE DRAWINGS

The apparatus and methods according to the present disclosure will be described by way of example with reference to the accompanying drawings, in which:

Figure 1 is a schematic diagram of a typical double column cycle for cryogenic separation of air;

Figure 2A is a schematic diagram of a cross-sectional plan view for one embodiment of the apparatus according to the present disclosure;

Figure 2B is a schematic diagram of a cross-sectional elevational view illustrating one type of collector with conduit inlets of one embodiment of the apparatus according to the present disclosure;

Figure 2C is a schematic diagram of another cross-sectional view illustrating a mixer and one arrangement of conduits of one embodiment of the apparatus according to the present disclosure;

Figures 2D and 2F are schematic diagrams of a cross-sectional elevational view illustrating sectors of a collector and geometric centers of sectors of one embodiment of the apparatus according to the present disclosure;

Figures 2E and 2G are schematic diagrams of a cross-sectional elevational view illustrating zones of a mixer and geometric centers of zones of one embodiment of the apparatus according to the present disclosure;

Figure 3A is a schematic diagram of a cross-sectional plan view of another embodiment of the apparatus according to the present disclosure;

Figures 3B and 3D are schematic diagrams of a cross-sectional elevational view illustrating sectors of a collector and geometric centers of sectors of another embodiment of the apparatus according to the present disclosure;

Figures 3C and 3E are schematic diagrams of a cross-sectional elevational view illustrating zones of a mixer and geometric centers of zones of another embodiment of the apparatus according to the present disclosure;

Figure 4A is a schematic diagram of a cross-sectional plan view of a portion of the apparatus according to the present disclosure between two packed sections in a packed column;

Figure 4B is a schematic diagram of a cross-sectional elevational view of a portion of the apparatus according to the present disclosure between two packed sections in a packed column;

Figure 5 is a schematic diagram of a cross-sectional plan view of another embodiment of a portion of the apparatus according to the present disclosure between two packed sections in a packed column;

Figure 6 is a schematic diagram used in the parallel column analysis of Example 1;

Figure 7 is another schematic diagram used in the parallel column analysis of Example 1 for the Base Case Liquid Maldistribution;

Figure 8 is graph illustrating the effect of liquid maldistribution with fixed CGAR flow showing the results for Example 1;

Figure 9 is another schematic diagram used in the parallel column analysis of Example 1 for the Case of Intermediate Liquid Mixed;

Figure 10 is another schematic diagram used in the parallel column analysis of Example 1 for the Case of Intermediate Liquid Transposed 180°;

Figure 11 is another schematic diagram used in the parallel column analysis of Example 1 for the Cases of Intermediate Liquid Transposed 120° and Intermediate Liquid Transposed 60°;

Figure 12 is a graph illustrating the effect of the angle by which intermediate liquid is transposed in Example 1;

Figure 13 is a schematic diagram used in the parallel column analysis for Example 2; and

Figure 14 is a graph illustrating the effect of liquid maldistribution with fixed GOX flow showing the results for Example 2.

DETAILED DESCRIPTION

The apparatus and methods according to the present disclosure mix and distribute a liquid descending in a column uniformly over the cross sectional area of a packed section in the column. The apparatus includes a collector, a mixer, a predistributor to spread the liquid outwardly from the mixer, and a final distributor to deposit the liquid uniformly over the cross sectional area of the packed section in the column. An embodiment of the apparatus also includes means (e.g., conduits arranged in certain ways described herein) to compensate for any inadequacy of mixing that may occur within the mixer. Optionally, the apparatus may include a filter through which at least some of the liquid may flow in order to protect a packed column from process debris and manufacturing debris. If liquid feeds external to the column are to be introduced to a packed section below, such feeds may be suitably introduced into the mixer after disengaging such liquid from any vapor that may be present therein.

The performance of a packed column depends on the quality of liquid and vapor distribution, which include uniformity in both the flow and composition of the two phases entering and across the cross section of the column. Different sections of a packed column exhibit different levels of sensitivity to maldistribution depending on the relationship between their equilibrium and operating lines. While the importance of flow uniformity is well understood in the literature, composition effects are less well understood. For sensitive sections it is presumed to be important to mix all or substantially all of the incoming liquid and then redistribute the liquid substantially uniformly across the cross sectional area of the column. Although uniform flow can be achieved, complete mixing requires elaborate and expensive devices and often results in an increase in column heights. This is especially true of large diameter columns, such as those with a diameter greater than about 2 meters.

The apparatus and methods according to the present disclosure achieve the benefits of complete mixing in a cost efficient manner without taking more elaborate steps that would be needed to obtain complete compositional mixing. The optional filter helps protect the liquid distributor and packed column from debris that can accumulate from the distillation and/or feed sections above. Such debris can clog holes in the liquid distributor and lead to a performance shortfall in the packed column below. Thus, in addition to providing for high efficiency of the packed column that can result in shorter bed heights than possible with prior art distributors, apparatus and methods according to the present disclosure provide for more reliable operation due to eliminating or minimizing problems that can be caused by debris.

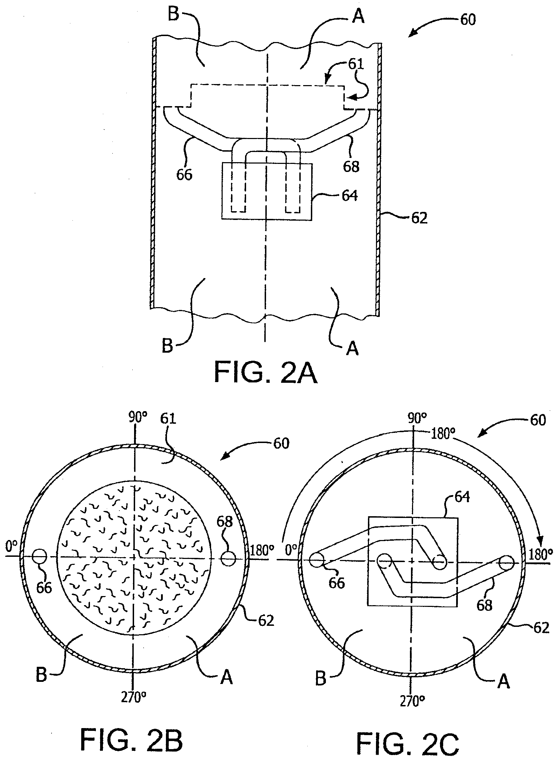

For clarity, Figures 2A-2G, 3A-3E, 4A-4B, and 5 illustrate only parts of the overall apparatus of the described embodiments.

As shown in Figures 2A-2C, the apparatus 60 is installed in the inner space of column 62. (The inner space is the space contained within the inside wall of column 62.) The inner space of column 62 in Figures 2A-2C is divided into column sides "A" and "B".

Figures 2A-2G show some features of one embodiment of the apparatus that will be described to illustrate how this embodiment operates. Referring to Figure 2A, liquid from a packed section (not shown) above drops down onto the collector 61. In the illustrated embodiment, the collector 61 has a ring element adjacent the inner wall of the column 62.

The liquid flows from the collector 61 into the mixer 64 through conduits 66 and 68. The liquid flows from the two conduits are combined in mixer 64. Liquid exits mixer 64 and is ultimately distributed to the packing (not shown) below.

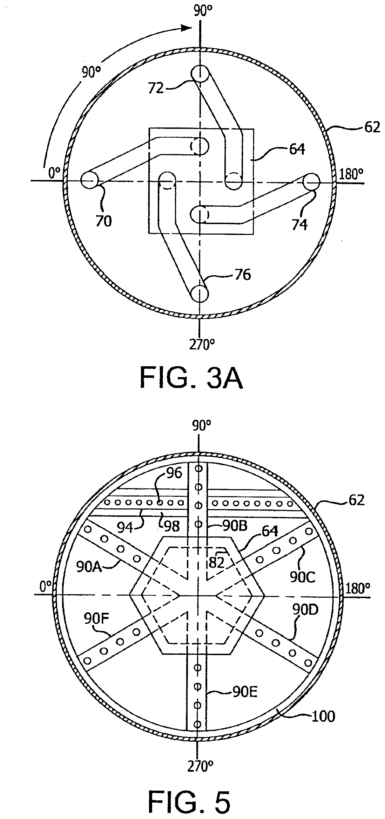

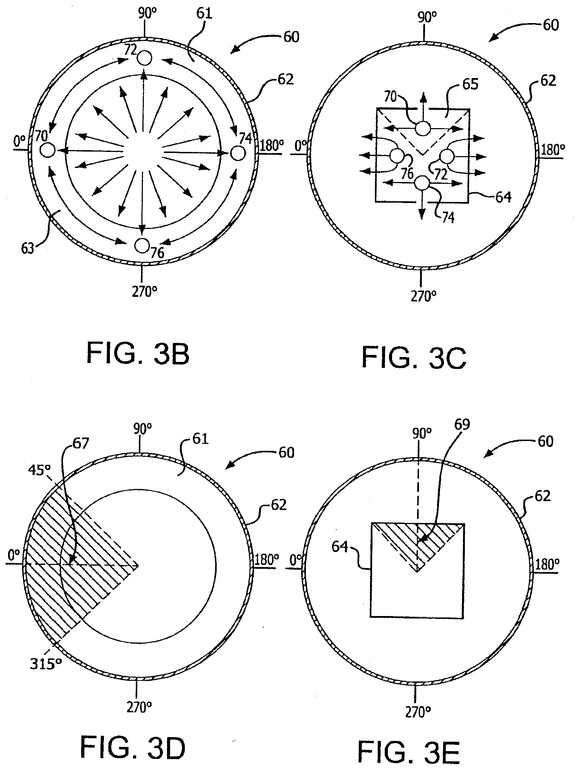

Preferably, all or substantially all of the liquid descending from above in column 62 passes through collector 61 and the conduits (66 and 68) and does not bypass the collector 61 or the conduits (66 and 68). Examples of equipment which may be used for collectors are shown in Figures 3-7 of U.S. Pat. App. Pub. No. 2009/0049864 A1 (Kovak, et al.).

In the embodiment illustrated in Figures 2A-2C, conduit 66 conveys liquid collected from the column side "B" above to the column side "A" below, while conduit 68 conveys liquid from the column side "A" above to the column side "B" below. In other words, and as depicted by the arrow in Figure 2C, liquid entering conduit 66 from collector 61 is transposed by 180 degrees in the circumferential direction by the time it exits conduit 66 into mixer 64 (*i.e.*, the liquid is transposed circumferentially). Although it is desirable for column side "A" and column side "B" in the illustrated embodiment to be uniform, persons skilled in the art will recognize that variations are possible to account for mechanical considerations.

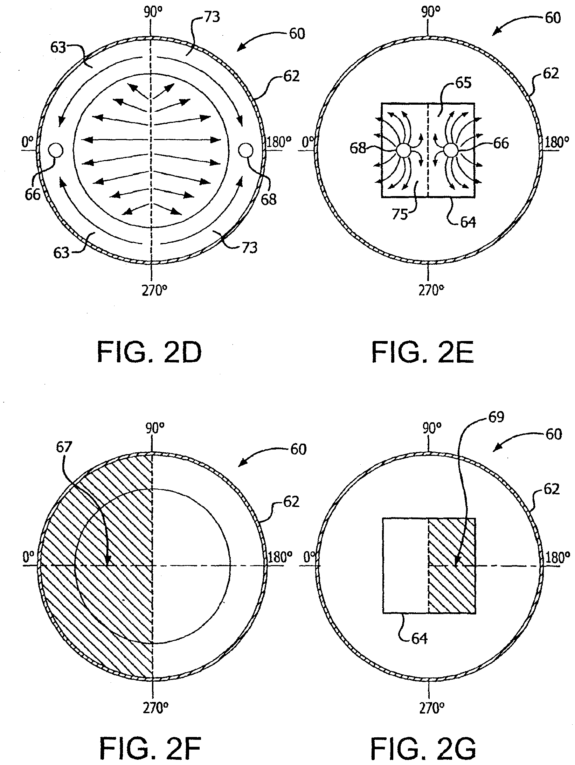

To clarify the workings of the apparatus and methods according to the present disclosure for systems with asymmetric conduit locations, or for systems with more than two conduits, it is helpful to understand where the flow into a conduit originates and where the flow out of the conduit goes. This may be explained using the schematic illustrations in Figures 2D-2G.

Referring first to Figure 2D, the concept of a "sector" of collector 61 is introduced. As shown in Figure 2D, liquid from the packing (not shown) above the collector 61 drops onto the collector 61, flows in the directions indicated by the arrows, and into the inlets of the conduits (66 and 68). Due to the symmetry of the conduit locations (*i.e.* the inlets of the conduits 66 and 68 are 180° apart) liquid flows into two sectors of the collector 61, a first sector 63 and a second sector 73. The liquid from the first sector 63 flows into the inlet of conduit 66; and liquid from the second sector 73 flows into the inlet of conduit 68.

Referring now to Figure 2F, the geometry of the first sector 63 of collector 61 is an area bounded by a semi circle and a chord running from 90° to 270° (*i.e.*, the area denoted by cross hatching). The geometric center of the first sector 63 lies on the line running from the center of the circle (the center of column 62) and the 0° location on the inner wall of the column 62. The location of this geometric center is approximately as indicated by the arrow 67.

Referring next to Figure 2E, the concept of a "zone" of mixer 64 is introduced. As shown in Figure 2E, liquid from the conduits 66 and 68 discharges into the mixer 64, flows in the direction indicated by the arrows, exits into the final distributor (not shown), and ultimately is transmitted to the packing (not shown) below. Due to the symmetry of the conduit locations (*i.e.* the outlets of conduits 66 and 68 are 180° apart) liquid flows into two zones of the mixer 64, a first zone 65 and a second zone 75. The liquid flows from the outlet of conduit 66 into the first zone 65; and liquid flows from the outlet of conduit 68 into the second zone 75.

Referring now to Figure 2G, the geometry of the first zone 65 of the mixer is a rectangular area denoted by cross hatching. The geometric center of the first zone 65 lies on the line running from the center of the circle (the center of column 62) and the 180° location on the inner wall of the column 62. The location of this geometric center is approximately as indicated by the arrow 69.

For the embodiment described in the preceding paragraphs and shown in Figures 2A-2G, liquid from the first sector 63 of the collector 61 is transmitted, via conduit 66, to the first zone 65 of the mixer 64, wherein the geometric center 67 of the first sector 63 of the collector 61 is positioned circumferentially away from the geometric center 69 of the first zone 65 of the mixer 64 by 180°.

Figures 3A-3E show some features of another embodiment that will be described to illustrate how this embodiment operates with more conduits. Referring to Figure 3A, there are four conduits 70, 72, 74, and 76, which collect liquid from collector 61 and deliver that liquid to mixer 64. Preferably, all or substantially all of the liquid descending from above in column 62 passes through collector 61 and the conduits (70, 72, 74, 76) and does not bypass the collector 61 or the conduits.

Referring now to Figure 3B, liquid from the packing (not shown) above drops onto the collector 61, flows in the directions indicated by the arrows, and into the inlets of the four conduits (70, 72, 74, 76). Due to the symmetry of the conduit locations (*i.e.* the inlets of conduits 70, 72, 74, and 76 are 90° apart) liquid flows into four sectors of the collector 61. The liquid from the first sector 63 flows into conduit 70.

Referring now to Figure 3D, the geometry of the first sector 63 of collector 61 is a pie-shaped area bounded by part of the circumference (the inner wall of column 62) and two lines: one line running from the 45° point on the circumference to the center (the center of column 62); the other line running from the 315° point on the circumference to the center. The pie-shaped area is denoted with cross hatching. The geometric center of this first sector 63 of the collector 61 lies on the line running from the center of the circle (the center of column 62) and the 0° location on the inner wall of the column 62. The location of the geometric center is approximately as indicated by the arrow 67.

Referring next to Figure 3C, liquid from the conduits (70, 72, 74, 76) discharges into the mixer 64, flows in the directions indicated by the arrows, and exits into the final distributor (not shown), and ultimately to the packing (not shown) below. Due to the symmetry of the conduit locations (*i.e.* the outlets of conduits 70, 72, 74, and 76 are 90° apart) liquid flows into four zones of the mixer 64. The liquid flows from the outlet of conduit 70 into the first zone 65.

Referring now to Figure 3E, the geometry of the first zone 65 of the mixer 64 is a triangular area denoted by cross hatching. The geometric center of the first zone lies on the line running from the center of the circle (the center of column 62) and the 90° location on the inner wall of the column 62. The location of the geometric center is approximately as indicated by the arrow 69.

For the embodiment described in the preceding paragraphs and shown in Figures 3A-3E, liquid from the first sector 63 of the collector 61 is transmitted, via conduit 70, to the first zone 65 of the mixer 64, wherein the geometric center 67 of the first sector 63 of the collector 61 is positioned circumferentially away from the geometric center 69 of the first zone 65 of the mixer 64 by 90°.

As discussed above and illustrated in Figures 2A-2G and 3A-3E, as used herein, a "sector" of the collector 61 is a geometric portion of the upper surface area of the collector 61 from which liquid is received by a conduit, and a "zone" of the mixer 64 is a geometric portion of the volume of the mixer 64 to which liquid is transmitted by a conduit. Since the shapes and dimensions of the sectors of the collector 61 may vary, as may the shapes and dimensions of the mixer 64, the relative position that a sector is positioned circumferentially away from a zone (*e.g.*, 60 degrees, 180 degrees, or some other degrees) may be measured from the geometric center of said sector to the geometric center of said zone.

Note that the embodiments illustrated in Figures 2A-2G, and 3A-3E are only representative embodiments. Other embodiments may transpose the liquid from multiple conduits in a regular manner, or some other manner, and in different circumferential directions. For example, the liquid may be transposed circumferentially in a conduit by between about 60 and 180 degrees, preferably by between about 120 and 180 degrees, and most preferably by about 180 degrees.

Although the embodiments illustrated in Figures 2A-2G, and 3A-3E suggest uniformity in the conduits, the sectors of the collector 61, and the zones of the mixer 64 from which and to which the liquid is transmitted by the conduits, persons skilled in the art will recognize that variations are possible in the collector 61 and the mixer 64, and in the shapes, dimensions, and locations of the conduits to account for mechanical considerations.

The arrows in Figure 2E are idealized and represent a case with little or no mixing of liquids. Persons skilled in the art will recognize that various means may be employed in the mixer to encourage better, or more complete, mixing, but those means (i) add mechanical complexity; (ii) add cost; and (iii) in general are only partially effective since a compromise is usually made to achieve mixing that is "good enough." The apparatus and methods according to the present disclosure overcome those problems by providing good performance even for the case shown in the Figures with little or no mixing.

The cross sectional area of the mixer 64 is a relatively small percentage of the total cross sectional area of the inner space of the column 62. To enhance overall mixing, transposing circumferentially the liquid from the collector 61 to the mixer 64 is provided to compensate for any lack of complete mixing which may occur in the mixer 64. This may be important in packed sections performing sensitive separations and in very large distillation columns. If liquid from outside of column 62 needs to be brought in, such liquid may be placed within the mixer 64 in the space between or besides the conduits, such that all or substantially all of the liquid feeding the packed section below will be well mixed, or at least split substantially uniformly to column sides "A" and "B" (illustrated in Figures 2A and 2B).

In the described embodiments, the mixer 64 occupies no more than 25%, and preferably no more than 20%, of the cross sectional area of the inner space of the column 62.

Figures 2A-2C show an arrangement with two conduits 66, 68, and Figure 3 shows an arrangement with four conduits 70, 72, 74, 76. However, other numbers of conduits may be used, and the conduits may have different shapes. Also, the conduits in alternative arrangements need not be identical to each other. The conduits (e.g., 66 and 68, or 70, 72, 74, and 76) shown in Figures 2C, and 3A are illustrated as circularly shaped conduits positioned at the locations shown relative to the column 62 and the mixer 64. However, the conduits could have other shapes and/or be positioned at other locations.

Persons skilled in the art will recognize that many variations are possible with respect to the size, shape, location, length, arrangement, and number of the conduits. Conduits of many kinds, located and arranged in many ways, may serve the purposes of the conduits shown in the embodiments discussed and illustrated herein.

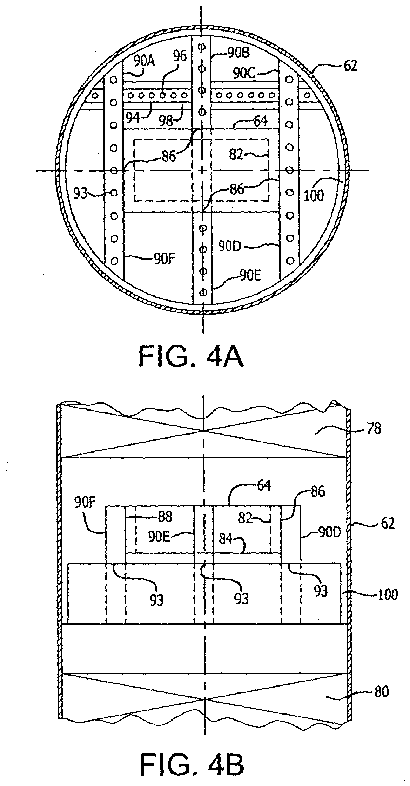

Other parts of the apparatus are now described with reference to Figures 4A, 4B, and 5. Figures 4A and 4B show an embodiment of part of the apparatus to be placed in a column 62 and between two packed sections 78 and 80. The packed sections may include structured packing, random packing, or other suitable liquid-vapor contacting means.

The apparatus includes a mixer 64 which is rectangular in cross section in the embodiment illustrated in Figures 4A and 4B. Persons skilled in the art will recognize that the mixer 64 may take many shapes or forms, and may be located in other positions, although a central mixer 64 is illustrated. Optionally, a filter 82 is placed inside the mixer 64. For clarity, the collector and conduits that feed the liquid to the mixer from section 78 above are not shown, but they would feed all or substantially all of the liquid inside the filter 82 within the mixer 64 and in a circumferentially transposed arrangement as described earlier.

The mixer 64 has a solid floor 84 in the embodiment illustrated in Figures 4A and 4B. Thus, all the liquid collected in the mixer 64 flows through filter 82 when the filter 82 is in use and then through perforated vertical walls 86 to a predistributor 88 that includes channels 90A-90F. The other parts of the perforated vertical walls 86 of the mixer 64 that are not connected to the channels 90A-90F are solid to contain the liquid and to hold a level within the mixer 64.

Each of the channels 90A-90F has an upper chamber and a lower chamber. The chambers are separated by a perforated plate with perforations 93. Thus, liquid from the upper chamber of each channel 90A-90F descends through perforations 93 of the perforated plate into the respective lower chamber. The lower chambers of the channels 90A-90F are connected with a plurality of troughs such as trough 94 shown as an example.

Each trough 94 has an array of perforations 96 to feed liquid to the packed section 80 below. In the illustrated embodiment, the troughs are arranged in a parallel fashion alternating with spaces 98 for the vapor to rise up the column 62. The troughs are also connected to an annular gutter 100. There is an interconnected network of the troughs, the annular gutter 100, and portions of the lower chambers of the channels 90A-90F which allow for hydraulic gradients to even out in order to create very uniform flow of liquid through the perforations 96 to the packed section 80 below.

Figure 5 shows another embodiment that also has six channels 90A-90F, which are arranged in a hexagonal pattern. Only the plan view is shown in Figure 5. In terms of the other features, the embodiment in Figure 5 is similar to the embodiment in Figures 4A and 4B. These are only illustrative examples in which the predistributor has six channels 90A-90F. Persons skilled in the art will recognize that different arrangements may be used with fewer channels (*e.g.*, 2 or 4 channels) or more channels (*e.g.*, 8 or 10 channels). Also, the mechanical means for supporting the mixer, the predistributor, the final distributor, and the packed sections within the column are not shown for clarity.

In the embodiments illustrated in Figures 4A, 4B, and 5, an annular-shaped gutter 100 may receive some of the liquid. The annular-shaped gutter 100 preferably is continuous and adjacent the perimeter of the inner wall of the column 62, as shown in Figures 4A and 5.

Although the above descriptions of several embodiments of the apparatus are in terms of a packed column with a circular cross sectional area, other embodiments of the apparatus can be used in non-circular columns, including, for example, divided wall columns. The features of a mixer with a limited cross sectional area, circumferentially transposed conduits, a filter, a predistributor, and a final distributor need to be designed and arranged in a suitable manner taking into account the non-circular nature of the packed column sections within one or both sides of a divided column or other column of non-circular shape.

The process according to the present disclosure for separating gases, *e.g.*, nitrogen, oxygen, and/or argon, from air by cryogenic distillation, which utilizes at least one liquid-vapor contacting column with at least two liquid-vapor contacting sections, may include an apparatus for collecting, mixing, and distributing a descending liquid from the upper liquid-vapor contacting section to the lower liquid-vapor contacting section like the apparatus discussed above. Optionally, when a liquid feed is introduced between the upper and lower liquid-vapor contacting sections of the column from outside the column, all or some of the external feed may be placed into the mixer as discussed above.

One embodiment of the method described herein for assembling an apparatus for distributing liquid in a liquid-vapor contacting column with at least two liquid-vapor contacting sections includes the steps of providing and assembling the components of an apparatus like the apparatus discussed above. Assembling the components into a liquid-vapor contacting column may be done with suitable support means that may include rivets and welds.

The apparatus and methods include many other embodiments and variations thereof which are not illustrated in the drawings or discussed in the Detailed Description section. Those embodiments and variations, however, do fall within the scope of the appended claims.

Persons skilled in the art will recognize that the embodiments and variations illustrated in the drawings and discussed in the Detailed Description section do not disclose all of the possible arrangements of the apparatus according to the present disclosure, and that other arrangements are possible. Accordingly, all such other arrangements are contemplated by the apparatus and methods according to the present disclosure, and are within the scope of the appended claims.

Persons skilled in the art also will recognize that many other embodiments incorporating the inventive concepts are possible, as well as many variations of the embodiments illustrated and described herein.

Although the apparatus and methods are discussed herein in connection with structured packing, persons skilled in the art will recognize that the apparatus and methods according to the present disclosure also may be used with other types of packing (*e.g.*, random packing).

EXAMPLES

The efficiency of distillation that occurs in the various packed sections of the double column cycle is sensitive to maldistribution in both the composition and flow of the vapor and liquid phases within those sections. Referring to Figure 1, this is particularly true of sections 13, 15, 23, and 25. In the Examples below, the sensitivity to maildistribution is analyzed by a well known method in the chemical engineering literature, which is referred to as parallel column analysis.

Example 1

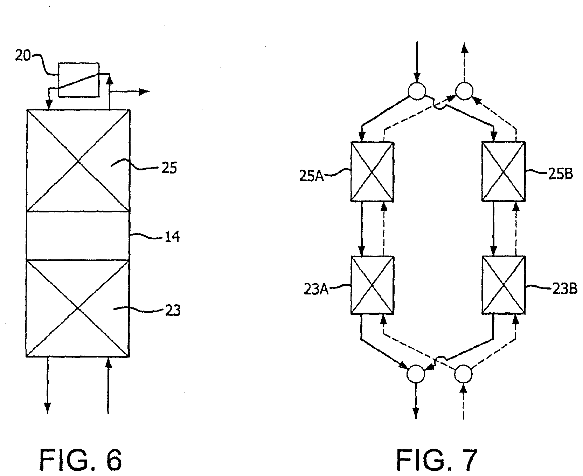

First consider the argon column 14 with its sections 23 and 25, such as described earlier under the double column cycle illustrated in Figure 1. A schematic diagram with the normal flow and operating conditions within those two sections is shown in Figure 6. Each of the two sections contains 35 theoretical stages and operates at a pressure of about 1.3 bara. The column operates at a molar liquid to vapor ratio of about 0.97 at the top of the column. Vapor feed at the bottom has a composition of 12% argon, 0.0010% nitrogen, and the balance oxygen. Under normal operation the composition of the crude argon product (CGAR) at the top would be 99.67% argon, 0.02% nitrogen, and the balance oxygen.

In performing parallel column analysis, each section is further considered to be split into two equal halves, namely 23A, 23B and 25A, 25B, as shown in the schematic illustration of Figure 7. The respective sections A and B are equal in cross section and isolated from each other. Nominally they would carry half of the total column liquid and vapor inside each of them. To evaluate sensitivity to maldistribution, the flow of liquid (solid lines in Figure 7) is assumed to be higher on the A side and lower on the B side, while the flow of vapor (dashed lines in Figure 7) is distributed uniformly to the two halves. There is no mixing or transfer of liquid or vapor between the two halves of the sections A and B. The level of maldistribution, defined by the parameter Flow lambda, is defined as the difference between the high and average liquid flows divided by the average of the two flows and mathematically as follows:

Flow lambda = (high liquid flow – low liquid flow) / (high liquid flow + low liquid flow)

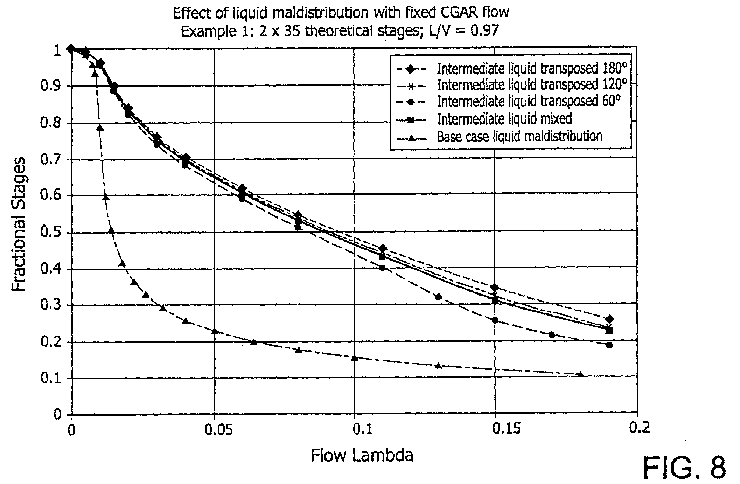

The effect of Flow lambda is determined as follows: 1) first, for a given degree of maldistribution, the CGAR composition is computed using the schematic of Figure 7; 2) next, the stages are reduced for the schematic of Figure 6 until the CGAR composition is the same as that obtained from the schematic of Figure 7; and 3) then, the fractional stages is computed as the stages used for the schematic of Figure 6 in step 2 divided by the stages used for the schematic of Figure 7. The fractional stages thus obtained is plotted versus Flow lambda in the bottom-most curve in Figure 8 (denoted "Base case liquid maldistribution"). As seen, the performance degrades significantly with flow maldistribution.

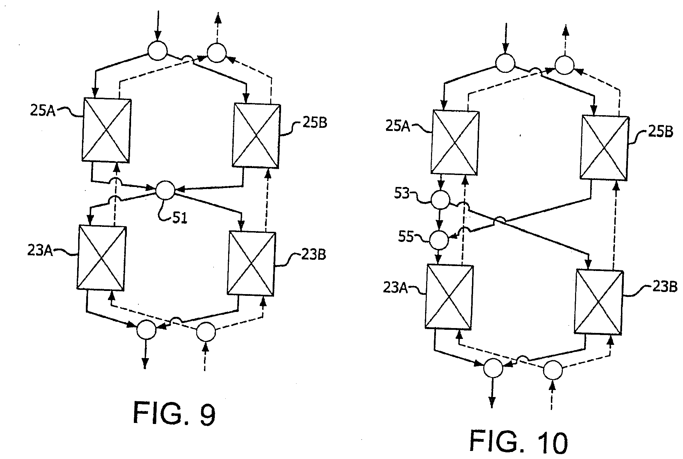

A second case is then simulated under the conditions shown in the schematic illustration of Figure 9. In this case the liquids coming out of the bottom of sections 25A and 25B are mixed in device 51 and redistributed from there in the same high and low flow proportions to the sections 23A and 23B below. The effect of intermediate mixing of the liquid is shown in Figure 8 as the "intermediate liquid mixed" curve. As seen, the performance - while still worse than the ideal value of 1.0 for fractional stages - is now significantly improved compared to the base case liquid maldistribution with no intermediate mixing. This effect is well understood in the literature.

A third case is then simulated under the conditions shown in the schematic illustration of Figure 10. In this case, all the liquid from upper section 25B is transposed to 23A via mixer 55, but only a portion of the liquid corresponding to low flow is transposed from upper section 25A to lower section 23B via splitter 53. The other portion from 25A is transmitted to 23A via splitter 53 and mixer 55. This is the most that can be transposed while also imposing flow imbalances. It is seen that the resulting performance as shown by the upper-most curve in Figure 8 as "intermediate liquid transposed 180°"' is even better than for the case where the liquid is completely mixed. This is a surprising finding that was not previously taught. The surprising and unexpected results were surprising and unexpected and would be surprising and unexpected to persons of ordinary skill in the art.

The practical significance of this calculation may be explained as follows. A collector, mixer and liquid distributor may be used in between sections 23 and 25. But if the liquid from the upper sections are transported without transposing into the lower sections and incomplete mixing occurs within the mixer, then the performance will be somewhere in between the base case and the intermediate liquid mixed case in Figure 8. On the other hand, if the liquid is transposed to the diametrically opposite sides into the mixer, and if there is incomplete mixing, then the performance will be somewhere in between the intermediate liquid transposed 180° case and the intermediate liquid mixed case. Thus, the result with transposing by 180° will be better than the result without transposing by 180°.

In these calculations it is assumed that there is no vapor mixing between the two lateral halves of the packed sections. In practice there will be some mixing, which becomes less effective as the column cross sections become large. It is seen that transposing the liquid by 180° compensates for inadequate liquid mixing in the distributor as well as inadequate vapor mixing in the packed column sections. This is a surprising and unexpected result, and would be surprising and unexpected to persons of ordinary skill in the art.

If there is perfect liquid mixing in the liquid distributor, then there will be no gain from transposing the liquid by 180°. But the means to achieve perfect mixing, such as static mixers, are expensive in terms of pressure drop, column height and cost of the overall system. The apparatus and methods according to the present disclosure of utilizing transposing of liquid by 180° will outperform the case with no transposing, and in the worst case will at least match the perfectly mixed case and at very little added cost.

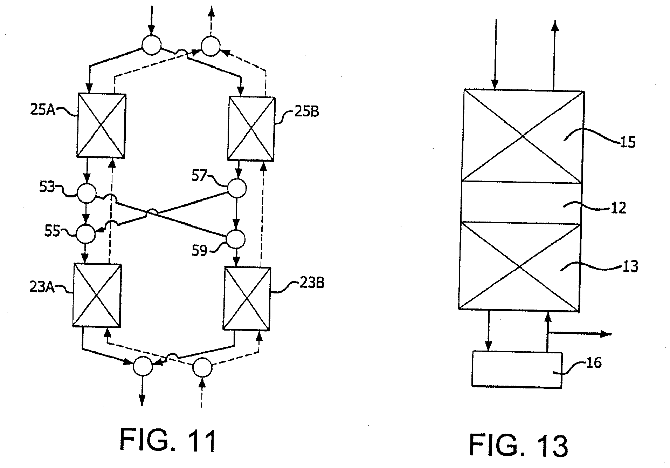

While the above cases clearly demonstrate the advantages of transposing the intermediate liquid by 180° to the opposite side of the column, there are situations in which the mechanical configurations can limit the angle by which transposing can be accomplished. But as will be demonstrated below most of the benefit can be achieved even by transposing by an angle that is much smaller than 180°. So a fourth case is simulated under the conditions shown in the schematic illustration of Figure 11. In this case only two thirds (2/3) of the liquid from upper section 25B is transposed to 23A via splitter 57 and mixer 55 and the equivalent amount of liquid from the upper section 25A is transposed to 23B via splitter 53 and mixer 59. The remaining liquid from the upper sections 25A and 25B are fed to the lower sections 23A and 23B without transposing via the splitters and mixers shown directly between them. This is equivalent to transposing the liquid from the two halves of a column by 120° each. It is seen that the resulting performance as shown by the second to the upper-most curve in Figure 8 as "intermediate liquid transposed 120°" is also better than the case where the liquid is completely mixed though it is not as good as the case for transposing by 180°. But this is also a surprising result as the effect of even a partial transposing of the intermediate liquid exceeds that of complete mixing.

Further, a fifth case is simulated under the conditions shown in the schematic illustration of Figure 11. In this case only one third (1/3) of the liquid from upper section 25B is transposed to 23A via splitter 57 and mixer 55 and the equivalent amount of liquid from the upper section 25A is transposed to 23B via splitter 53 and mixer 59. The remaining liquid from the upper sections 25A and 25B are fed to the lower sections 23A and 23B without transposing via the splitters and mixers shown directly between them. This is equivalent to transposing the liquid from the two halves of a column by 60° each. It is seen that the resulting performance as shown by the second from the lower-most curves in Figure 8 as "intermediate liquid transposed 60°" is a significant improvement over the base case and approaches the benefit of the intermediate liquid mixed case.

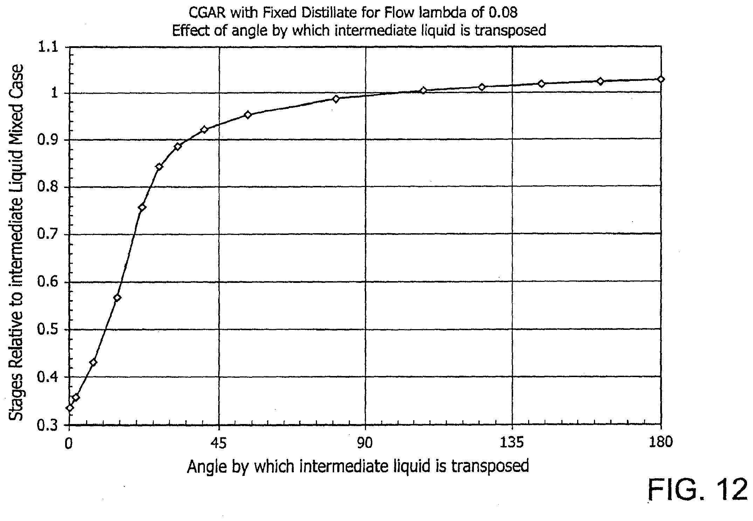

As a further illustration, Figure 12 shows the effect of the angle by which intermediate liquid is transposed on the stages obtained relative to complete mixing. This is an illustrative curve for the calculations as outlined above in Example 1 for the specific case wherein Flow lambda has a value of 0.08. A value of 1.0 on the ordinate corresponds to the stages obtained for the intermediate liquid mixed case. As seen, the performance increases rapidly as the angle by which liquid is transposed increases, reaching a value higher than 95% at about 60°. Beyond this the gain is more gradual and the overall performance is over 100% when the angle is in the range of 120° to 180°.

Example 2

Next consider the bottom of the low pressure column 12 with its sections 13 and 15 such as described earlier under the double column cycle illustrated in Figure 1. A schematic diagram with the normal flow and operating conditions within those two sections is shown in Figure 13. Each of the two sections contains 20 theoretical stages and operates at a pressure of about 1.3 bara. The column operates at a molar liquid to vapor ratio of about 1.40 at the top of the column. Liquid feed at the top has a composition of 12% argon, 0.0010% nitrogen, and the balance oxygen. Under normal operation the composition of the GOX product at the bottom would be 99.80% oxygen and the balance argon.

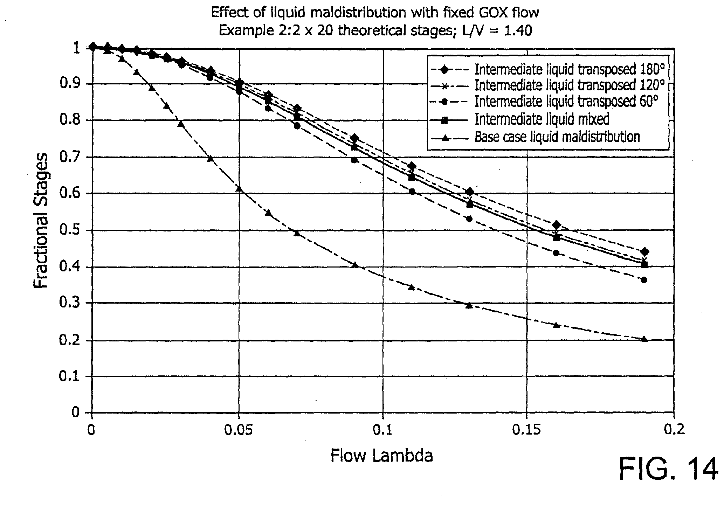

Sensitivity to maldistribution is simulated in a manner similar to that used in Example 1. The corresponding five curves are shown in Figure 14. Note that the curves show the same relationships wherein the intermediate liquid mixed case is a significant improvement over the base case, while the intermediate liquid transposed 180° case is even better. Likewise, the intermediate liquid transposed 120° case is also better than the intermediate liquid mixed case though not as good as the intermediate liquid transposed 180° case. Lastly, the intermediate liquid transposed 60° case is a significant improvement over the base case and approaches the performance of the intermediate liquid mixed case. The gain in performance in the last case would be more than 95% of the gain from perfect mixing for the case when Flow lambda equals 0.08 though this result is not shown as an explicit curve. Again, this efficacy of transposing intermediate liquid is a surprising and unexpected result in a manner similar to Example 1, which result was surprising and unexpected and would be surprising and unexpected to persons of ordinary skill in the art.

As noted before in the process for separation of the components of air by cryogenic distillation, the two sections depicted in these examples are highly sensitive to maldistribution. In one case, the liquid to vapor ratio is less than one, and in the other case the ratio is more than one. In both cases, transposing of the liquid in between the packed sections by 120 to 180° is seen to be more effective than perfect mixing and redistribution of liquid in between the sections. And transposing of the liquid in between the packed sections by 60° achieves more than 95% of the benefit for the case when Flow lambda equals 0.08. This unexpected behavior has not been reported in any literature that the Applicants are aware of.

These results may be explained based on what are known as McCabe-Thiele diagrams, which are used to model the separation by distillation of binary mixtures. In the Examples, even though some nitrogen is present, its proportion is so small that the mixtures can be considered to be essentially binaries of argon and oxygen. A McCabe-Thiele diagram is constructed using two lines. One is an equilibrium line that shows the relationship between the compositions of the vapor and liquid phases that leave an equilibrium stage within a distillation column. A packed column does not have discrete equilibrium stages like a trayed column, but the equilibrium line is constructed the same way.

The other line in the McCabe-Thiele diagram is an operating line that shows the relationship between the compositions of the vapor and liquid phases that cross each other at any given horizontal location or between equilibrium stages. The slope of the operating line is given by the ratio of the molar liquid and vapor flows within the column. In an efficient distillation column the equilibrium and operating lines will be spaced apart more or less uniformly away from each other, which will allow for the existence of sufficient driving forces to produce useful mass transfer within the entire column. In the case noted as base case liquid maldistribution in Example 1, the operating lines have different slopes from the nominal value of 0.97. Due to this condition, the operating lines in the columns with the high liquid flow pinch against the equilibrium line near the top with the result that very little separation occurs in the upper half and any useful separation occurs mostly in the lower half. Likewise, the operating lines in the columns with the low liquid flow pinch against the equilibrium line near the bottom with the result that very little separation occurs in the lower half and any useful separation occurs mostly in the upper half. Due to this mismatch, the compositions in the middle between the upper and lower sections in the two parallel columns turn out to be very different from each other, which condition is not ideal for efficient operation. This is the reason for the poor performance under the base case liquid maldistribution condition.

When the intermediate liquid is mixed and redistributed, the compositions between the two halves are brought closer together and the pinching effect, while still present, is less severe and thus the performance improves. However, when the intermediate liquid is transposed by 180° as in Example 1, the operating lines are modified such that the bottom section with the low liquid flow does more useful separation resulting in an overall composition with higher argon content in between the upper and lower sections. This effect in turn results in a higher overall argon content at the top of the column leading to more overall separation compared to the intermediate liquid mixed case. The mechanism by which performance improves when the intermediate liquid is transposed by the angles of 120° and 60° is similar to that of 180° though the benefits are proportionately lower.

Likewise, the results shown in Example 2 may be explained in an analogous way. In this case, the feed is at the top and intermediate transposing of liquid by 180° results in an overall composition that is higher in oxygen compared to the intermediate liquid mixed case. This effect in turn results in a higher overall oxygen content at the bottom of the column yielding more overall separation compared to the intermediate liquid mixed case. The mechanism by which performance improves when the intermediate liquid is transposed by the angles of 120° and 60° is similar to that of 180° though the benefits are proportionately lower.

Although the above description is a valid explanation of the effects seen in the Examples provided, the apparatus and methods according to the present disclosure do not depend on this explanation for their validity. It may be possible to offer alternative explanations as to why this behavior is observed. Also, as similar trends have been observed in two different packed sections with different operating conditions, it is believed that this is a general phenomenon that will be beneficial in most, if not all, types of distillation columns separating different types of mixtures. Thus, the apparatus and methods according to the present disclosure have very broad applicability.

Although illustrated and described herein with reference to certain specific embodiments, the present invention is nevertheless not intended to be limited to the details shown. Rather, various modifications may be made within the scope of the appended claims. Any information falling outside the scope of the claims is for explanation only.

## Claims

1. An apparatus (60) for distributing a flow of a liquid descending in an inner space of a packed column (62), comprising:

   a collector (61) disposed in the inner space of the packed column (62) and adapted to collect at least a portion of the flow of the liquid descending in the inner space of the packed column (62);
   a mixer (64) below and vertically spaced apart from the collector (61) in the inner space of the packed column (62), the mixer (64) disposed in the inner space of the packed column (62) and adapted to receive and mix at least a portion of the liquid collected on the collector (61);
   at least two conduits (66, 68, 70, 72, 74, 76) having a first end in fluid communication with the collector (61) and a second end in fluid communication with the mixer (64), the conduits adapted to receive and transmit downward at least a portion of the liquid from the collector (61) to the mixer (64);
   wherein the inlets of the at least two conduits (66, 68, 70, 72, 74, 76) are symmetrically located in the collector (61) and the outlets of the at least two conduits (66, 68, 70, 72, 74, 76) are symmetrically located in the mixer (64), the conduit inlets dividing the collector (61) into symmetric sectors (63, 73) and the conduit outlets dividing the mixer (64) into symmetric zones (65, 75);
   a predistributor (88) disposed in the inner space of the packed column (62) and adapted to receive at least a portion of a flow of a mixed liquid from the mixer (64) and to transmit at least a part of the received flow of the mixed liquid outwardly from the predistributor (88); and
   a final distributor disposed in the inner space of the packed column (62) and adapted to receive at least a portion of a flow of a predistributed liquid from the predistributor (88) and to transmit at least a portion of the received flow of the predistributed liquid substantially uniformly over at least a portion of a cross-sectional area of the inner space of the packed column (62);

**characterized in that** the cross-sectional area of the mixer (64) occupies no more than about 25% of a cross-sectional area of the inner space of the packed column (62);

wherein a geometric center of a first sector (63) of the collector (61) is positioned circumferentially away from a geometric center of a first zone (65) of the mixer (64) such that liquid transmitted through a first conduit is circumferentially transposed from the first sector (63) of the collector (61) to the first zone (65) of the mixer (64) and a geometric center of a second sector (73) of the collector is positioned circumferentially away from a geometric center of a second zone (75) of the mixer (64) such that liquid transmitted through a second conduit is circumferentially transposed from the second sector (73) of the collector (61) to the second zone (75) of the mixer (64).

2. An apparatus as in claim 1, wherein the apparatus comprises two conduits (66, 68) dividing the collector (61) into two symmetric sectors (63, 73) and the mixer (64) into two symmetric zones (65, 75).

3. An apparatus as in claim 1, wherein the apparatus comprises four conduits (70, 72, 74, 76) dividing the collector (61) into four symmetric sectors and the mixer (64) into four symmetric zones.

4. An apparatus as in claim 1, wherein the geometric center of the first sector (63) of the collector (61) is positioned circumferentially away from the geometric center of the first zone (65) of the mixer (64) by about 60° to about 180°, and preferably by about 120° to about 180°, and most preferably by about 180°.

5. An apparatus as in claim 4, wherein the geometric center of the second sector (73) of the collector (61) is positioned circumferentially away from the geometric center of the second zone (75) of the mixer (64) by about 60° to about 180°, and preferably by about 120° to about 180°, and most preferably by about 180°.

6. An apparatus as in claim 1,
wherein the predistributor (88) includes a plurality of channels (90A-90F) adapted to transmit downward at least part of the received flow of the mixed liquid, and
wherein the final distributor includes a plurality of troughs (94) adapted to transmit at least part of the flow of the predistributed liquid, each trough having at least one aperture (96) and being in fluid communication with at least one channel of the predistributor (88).

7. A method for distributing a flow of a liquid descending in an inner space of a packed column (62) using the apparatus of Claim 1, the method comprising the steps of:

introducing into the inner space of the packed column (62) above the collector (61) disposed in the inner space the flow of the liquid descending in the inner space of the packed column (62);
collecting on the collector (61) at least a portion of the flow of the liquid descending in the inner space of the packed column (62);
transmitting downward through a first conduit in fluid communication with the collector (61) at least a portion of the liquid from the first sector (63) of the collector (61) to the first zone (65) of the mixer (64) disposed in the inner space below and spaced apart from the collector (61), whereby the liquid transmitted through the first conduit is circumferentially transposed from the first sector (63) of the collector (61) to the first zone (65) of the mixer (64);
transmitting downward through a second conduit in fluid communication with the collector (64) at least a portion of the liquid from the second sector (73) of the collector (61) to the second zone (75) of the mixer (64), whereby the liquid transmitted through the second conduit is circumferentially transposed from the second sector (73) of the collector (61) to the second zone (75) of the mixer (64); and
mixing in the mixer (64) the liquid transmitted to the first zone (65) of the mixer (64) from the first sector (63) of the collector (61) with the liquid transmitted to the second zone (75) of the mixer (64) from the second sector (73) of the collector (61), thereby producing a mixed liquid;
transmitting from the mixer (64) to a predistributor (88) disposed in the inner space of the packed column (62) at least a portion of the flow of the mixed liquid; and
transmitting outwardly from the predistributor (88) at least the part of the received flow of the mixed liquid received from the mixer (64);
receiving by a final distributor disposed in the inner space of the packed column (62) at least a portion of the flow of the predistributed liquid from the predistributor (88); and

transmitting at least a portion of the received flow of the predistributed liquid substantially uniformly over at least a portion of the cross-sectional area of the inner space of the packed column (62).

8. A method as in claim 7, wherein the liquid transmitted through the first conduit is circumferentially transposed from the first sector (63) of the collector (61) to the first zone (65) of the mixer (64) by about 60° to about 180°, and preferably by about 120° to about 180°, and most preferably by about 180°.

9. A method as in claim 8, wherein the liquid transmitted through the second conduit is circumferentially transposed from the second sector (73) of the collector (64) to the second zone (75) of the mixer (64) by about 60° to about 180°, and preferably by about 120° to about 180°, and most preferably by about 180°.

10. A method as in claim 7,
wherein the predistributor (88) includes a plurality of channels (90A-90F) adapted to transmit downward at least part of the received flow of the mixed liquid, and
wherein the final distributor includes a plurality of troughs (94) adapted to transmit at least part of the flow of the predistributed liquid, each trough (94) having at least one aperture (96) and being in fluid communication with at least one channel (90A-90F) of the predistributor (88).

11. An apparatus as in claim 1 or a method as in claim 7, wherein the cross-sectional area of the mixer (64) occupies no more than about 20%, of the cross-sectional area of the inner space of the packed column (62).

12. A process for cryogenic air separation, comprising contacting an ascending vapor and a descending liquid counter-currently in a packed column (62) having an inner space with a first mass transfer section in the inner space and a second mass transfer section below and spaced apart from the first mass transfer section in the inner space, wherein an apparatus (60) as in claim 1 positioned between the first mass transfer section and the second mass transfer section distributes a flow of the descending liquid from the first mass transfer section to the second mass transfer section.

**Patentansprüche**

1. Vorrichtung (60) zum Verteilen eines Stroms einer Flüssigkeit, die in einem Innenraum einer Füllkörperkolonne (62) absteigt, umfassend:

einen Kollektor (61), der in dem Innenraum der Füllkörperkolonne (62) angeordnet ist und zum Sammeln zumindest eines Teils des Stroms der Flüssigkeit, der in den Innenraum der Füllkörperkolonne (62) absteigt, geeignet ist;
einen Mischer (64) unterhalb des Kollektors (61) und vertikal davon beabstandet in dem Innenraum der Füllkörperkolonne (62), wobei der Mischer (64) in dem Innenraum der Füllkörperkolonne (62) angeordnet ist und zum Aufnehmen und Mischen zumindest eines Teils der an dem Kollektor (61) gesammelten Flüssigkeit geeignet ist;
zumindest zwei Leitungen (66, 68, 70, 72, 74, 76) die ein erstes Ende in Fluidverbindung mit dem Kollektor (61) und ein zweites Ende in Fluidverbindung mit dem Mischer (64) aufweisen, wobei die Leitungen geeignet sind, zumindest einen Teil der Flüssigkeit aufzunehmen und aus dem Kollektor (61) zu dem Mischer (64) nach unten zu übertragen;
wobei die Einlässe der zumindest zwei Leitungen (66, 68, 70, 72, 74, 76) symmetrisch in dem Kollektor (61) und die Auslässe der zumindest zwei Leitungen (66, 68, 70, 72, 74, 76) symmetrisch in dem Mischer (64) angeordnet sind, wobei die Leitungseinlässe den Kollektor (61) in symmetrische Sektoren (63, 73) und die Leitungsauslässe den Mischer (64) in symmetrische Zonen (65, 75) unterteilen;
einen Vorverteiler (88), der in dem Innenraum der Füllkörperkolonne (62) angeordnet ist und geeignet ist, zumindest einen Teil eines Stroms einer gemischten Flüssigkeit aus dem Mischer (64) aufzunehmen und zumindest einen Teil des aufgenommenen Stroms der gemischten Flüssigkeit nach außerhalb des Vorverteilers (88) zu übertragen; und
einen Endverteiler, der in dem Innenraum der Füllkörperkolonne (62) angeordnet ist und geeignet ist, zumindest einen Teil eines Stroms einer vorverteilten Flüssigkeit aus dem Vorverteiler (88) aufzunehmen und zumindest einen Teil des aufgenommenen Stroms der vorverteilten Flüssigkeit im Wesentlichen gleichmäßig über zumindest einen Teil einer Querschnittsfläche des Innenraums der Füllkörperkolonne (62) zu übertragen;

**dadurch gekennzeichnet, dass** die Querschnittsfläche des Mischers (64) nicht mehr als etwa 25% einer Querschnittsfläche des Innenraums der Füllkörperkolonne (62) einnimmt; wobei ein geometrischer Mittelpunkt eines ersten Sektors (63) des Kollektors (61) in Umfangsrichtung entfernt von einem geometrischen Mittelpunkt einer ersten Zone (65) des Mischers (64) positioniert ist, so dass die durch eine erste Leitung übertragene Flüssigkeit in Umfangsrichtung aus dem ersten Sektor (63) des Kollektors (61) in die erste Zone (65) des Mischers (64) umgesetzt wird, und ein geometrischer Mittelpunkt eines zweiten Sektors (73) des Kollektors in Umfangsrichtung entfernt von einem geometrischen Mittelpunkt einer zweiten Zone (75) des Mischers (64) positioniert ist, so dass die durch eine zweite Leitung übertragene Flüssigkeit aus dem zweiten Sektor (73) des Kollektors (61) in Umfangsrichtung in die zweite Zone (75) des Mischers (64) umgesetzt wird.

2. Vorrichtung nach Anspruch 1, wobei die Vorrichtung zwei Leitungen (66, 68) umfasst, die den Kollektor (61) in zwei symmetrische Sektoren (63, 73) und den Mischer (64) in zwei symmetrische Zonen (65, 75) aufteilen.

3. Vorrichtung nach Anspruch 1, wobei die Vorrichtung vier Leitungen (70, 72, 74, 76) umfasst, die den Kollektor (61) in vier symmetrische Sektoren und den Mischer (64) in vier symmetrische Zonen unterteilen.

4. Vorrichtung nach Anspruch 1, wobei der geometrische Mittelpunkt des ersten Sektors (63) des Kollektors (61) in Umfangsrichtung von dem geometrischen Mittelpunkt der ersten Zone (65) des Mischers (64) um etwa 60° bis etwa 180° und vorzugsweise um etwa 120° bis etwa 180° und am meisten bevorzugt um etwa 180° versetzt positioniert ist.

5. Vorrichtung nach Anspruch 4, wobei der geometrische Mittelpunkt des zweiten Sektors (73) des Kollektors (61) in Umfangsrichtung von dem geometrischen Mittelpunkt der zweiten Zone (75) des Mischers (64) um etwa 60° bis etwa 180° und vorzugsweise um etwa 120° bis etwa 180° und am meisten bevorzugt um etwa 180° versetzt positioniert ist.

6. Vorrichtung nach Anspruch 1,
wobei der Vorverteiler (88) eine Vielzahl von Kanälen (90A-90F) aufweist, die geeignet sind, zumindest einen Teil des aufgenommenen Stroms der gemischten Flüssigkeit nach unten zu übertragen, und
wobei der Endverteiler eine Vielzahl von Mulden (94) aufweist, die geeignet sind, zumindest einen Teil des Stroms der vorverteilten Flüssigkeit zu übertragen, wobei jede Mulde zumindest eine Öffnung (96) aufweist und in Fluidverbindung mit zumindest einem Kanal des Vorverteilers (88) steht.

7. Verfahren zum Verteilen eines Stroms einer Flüssigkeit, die in einem Innenraum einer Füllkörperkolonne (62) absteigt, unter Verwendung der Vorrichtung nach Anspruch 1, wobei das Verfahren die folgenden Schritte umfasst:

Einbringen in den Innenraum der Füllkörperkolonne (62) oberhalb des in dem Innenraum angeordneten Kollektors (61) des Stroms der in den Innenraum der Füllkörperkolonne (62) absteigenden Flüssigkeit;
Sammeln an dem Kollektor (61) von zumindest einem Teil des Stroms der in den Innenraum der Füllkörperkolonne (62) absteigenden Flüssigkeit;
Übertragen nach unten durch eine erste Leitung in Fluidverbindung mit dem Kollektor (61) zumindest eines Teils der Flüssigkeit aus dem ersten Sektor (63) des Kollektors (61) in die ersten Zone (65) des Mischers (64), die in dem Innenraum unterhalb des Kollektors (61) und davon beabstandet angeordnet ist, wodurch die durch die erste Leitung übertragene Flüssigkeit in Umfangsrichtung aus dem ersten Sektor (63) des Kollektors (61) in die erste Zone (65) des Mischers (64) umgesetzt wird;
Übertragen nach unten durch eine zweite Leitung in Fluidverbindung mit dem Kollektor (64) zumindest eines Teils der Flüssigkeit aus dem zweiten Sektor (73) des Kollektors (61) in die zweite Zone (75) des Mischers (64), wodurch die durch die zweite Leitung übertragene Flüssigkeit in Umfangsrichtung aus dem zweiten Sektor (73) des Kollektors (61) in die zweite Zone (75) des Mischers (64) umgesetzt wird;
Mischen in dem Mischer (64) der Flüssigkeit, die aus dem ersten Sektor (63) des Kollektors (61) in die erste Zone (65) des Mischers (64) übertragen wird, mit der Flüssigkeit, die aus dem zweiten Sektor (73) des Kollektors (61) in die zweite Zone (75) des Mischers (64) übertragen wird, wodurch eine gemischte Flüssigkeit erzeugt wird;
Übertragen aus dem Mischer (64) in einen Vorverteiler (88), der in dem Innenraum der Füllkörperkolonne (62) angeordnet ist, zumindest eines Teils des Stroms der gemischten Flüssigkeit; und
Übertragen nach außerhalb des Vorverteilers (88) zumindest des Teils des aufgenommenen Stroms der gemischten Flüssigkeit, der aus dem Mischer (64) aufgenommen wird;
Aufnehmen durch einen Endverteiler, der in dem Innenraum der Füllkörperkolonne (62) angeordnet ist, zumindest eines Teils des Stroms der vorverteilten Flüssigkeit aus dem Vorverteiler (88); und

Übertragen zumindest eines Teils des aufgenommenen Stroms der vorverteilten Flüssigkeit im Wesentlichen gleichmäßig über zumindest einen Teil der Querschnittsfläche des Innenraums der Füllkörperkolonne (62).

8. Verfahren nach Anspruch 7, wobei die durch die erste Leitung übertragene Flüssigkeit aus dem ersten Sektor (63) des Kollektors (61) in Umfangsrichtung in die erste Zone (65) des Mischers (64) um etwa 60° bis etwa 180° und vorzugsweise um etwa 120° bis etwa 180° und am meisten bevorzugt um etwa 180° umgesetzt wird.

9. Verfahren nach Anspruch 8, wobei die durch die zweite Leitung übertragene Flüssigkeit aus dem zweiten Sektor (73) des Kollektors (64) in Umfangsrichtung in die zweite Zone (75) des Mischers (64) um etwa 60° bis etwa 180° und vorzugsweise um etwa 120° bis etwa 180° und am meisten bevorzugt um etwa 180° umgesetzt wird.

10. Verfahren nach Anspruch 7, wobei der Vorverteiler (88) eine Vielzahl von Kanälen (90A-90F) aufweist, die geeignet sind, zumindest einen Teil des aufgenommenen Stroms der gemischten Flüssigkeit nach unten zu übertragen, und wobei der Endverteiler eine Vielzahl von Mulden (94) aufweist, die geeignet sind, zumindest einen Teil des Stroms der vorverteilten Flüssigkeit zu übertragen, wobei jede Mulde (94) zumindest eine Öffnung (96) aufweist und mit zumindest einem Kanal (90A-90F) des Vorverteilers (88) in Fluidverbindung steht.

11. Vorrichtung nach Anspruch 1 oder ein Verfahren nach Anspruch 7, wobei die Querschnittsfläche des Mischers (64) nicht mehr als etwa 20 % der Querschnittsfläche des Innenraumes der Füllkörperkolonne (62) einnimmt.

12. Verfahren zur kryogenen Luftzerlegung, umfassend das Kontaktieren eines aufsteigenden Dampfes und einer gegenläufig absteigenden Flüssigkeit in einer Füllkörperkolonne (62), die einen Innenraum mit einem ersten Stoffübertragungsabschnitt in dem Innenraum und einem zweiten Stoffübertragungsabschnitt unterhalb des ersten Stoffübertragungsabschnitts und davon beabstandet im Innenraum aufweist, wobei eine Vorrichtung (60) nach Anspruch 1 zwischen dem ersten Stoffübertragungsabschnitt und dem zweiten Stoffübertragungsabschnitt positioniert ist und einen Strom der absteigenden Flüssigkeit aus dem ersten Stoffübertragungsabschnitt in den zweiten Stoffübertragungsabschnitt verteilt.

## Revendications

1. Appareil (60) de distribution d'un flux d'un liquide descendant dans un espace intérieur d'une colonne garnie (62), comprenant :

un collecteur (61) disposé dans l'espace intérieur de la colonne garnie (62) et adapté pour collecter au moins une portion du flux du liquide descendant dans l'espace intérieur de la colonne garnie (62) ;
un mélangeur (64) espacé en-dessous et verticalement du collecteur (61) dans l'espace intérieur de la colonne garnie (62), le mélangeur (64) étant disposé dans l'espace intérieur de la colonne garnie (62) et adapté pour recevoir et mélanger au moins une portion du liquide collecté sur le collecteur (61) ;
au moins deux conduits (66, 68, 70, 72, 74, 76) ayant une première extrémité en communication fluidique avec le collecteur (61) et une seconde extrémité en communication fluidique avec le mélangeur (64), les conduits étant adaptés pour recevoir et transmettre vers le bas au moins une portion du liquide du collecteur (61) au mélangeur (64) ;
dans lequel les entrées des au moins deux conduits (66, 68, 70, 72, 74, 76) sont situées symétriquement dans le collecteur (61) et les sorties des au moins deux conduits (66, 68, 70, 72, 74, 76) sont situées symétriquement dans le mélangeur (64), les entrées de conduit divisant le collecteur (61) en secteurs symétriques (63, 73) et les sorties de conduit divisant le mélangeur (64) en zones symétriques (65, 75) ;
un prédistributeur (88) disposé dans l'espace intérieur de la colonne garnie (62) et adapté pour recevoir au moins une portion d'un flux d'un liquide mélangé du mélangeur (64) et pour transmettre au moins une partie du flux reçu du liquide mélangé vers l'extérieur depuis le prédistributeur (88) ; et
un distributeur final disposé dans l'espace intérieur de la colonne garnie (62) et adapté pour recevoir au moins une portion d'un flux d'un liquide prédistribué du prédistributeur (88) et pour transmettre au moins une portion du flux reçu du liquide prédistribué sensiblement uniformément sur au moins une portion d'une aire de section transversale de l'espace intérieur de la colonne garnie (62) ;
**caractérisé en ce que** l'aire de section transversale du mélangeur (64) n'occupe pas plus de 25 % d'une aire de section transversale de l'espace intérieur de la colonne garnie (62) ;
dans lequel un centre géométrique d'un premier secteur (63) du collecteur (61) est positionné circonférentiellement à l'écart d'un centre géométrique d'une première zone (65) du mélangeur (64) de sorte qu'un liquide transmis à travers un premier conduit est transposé circonférentiellement du premier secteur (63) du collecteur (61) à la première zone (65) du mélangeur (64) et un centre géométrique d'un deuxième secteur (73) du collecteur est positionné circonférentiellement à l'écart d'un centre géométrique d'une deuxième zone (75) du mélangeur (64) de sorte qu'un liquide transmis à travers un deuxième conduit est transposé circonférentiellement du deuxième secteur (73) du collecteur (61) à la deuxième zone (75) du mélangeur (64).

2. Appareil selon la revendication 1, dans lequel l'appareil comprend deux conduits (66, 68) divisant le collecteur (61) en deux secteurs symétriques (63, 73) et le mélangeur (64) en deux zones symétriques (65, 75).

3. Appareil selon la revendication 1, dans lequel l'appareil comprend quatre conduits (70, 72, 74, 76) divisant le collecteur (61) en quatre secteurs symétriques et le mélangeur (64) en quatre zones symétriques.

4. Appareil selon la revendication 1, dans lequel le centre géométrique du premier secteur (63) du collecteur (61) est positionné circonférentiellement à l'écart du centre géométrique de la première zone (65) du mélangeur (64) d'environ 60° à environ 180°, et de préférence d'environ 120° à environ 180°, et plus préférablement d'environ 180°.

5. Appareil selon la revendication 4, dans lequel le centre géométrique du deuxième secteur (73) du collecteur (61) est positionné circonférentiellement à l'écart du centre géométrique de la deuxième zone (75) du mélangeur (64) d'environ 60° à environ 180°, et de préférence d'environ 120° à environ 180°, et plus préférablement d'environ 180°.

6. Appareil selon la revendication 1,
dans lequel le prédistributeur (88) inclut une pluralité de canaux (90A-90F) adaptés pour transmettre vers le bas au moins une partie du flux reçu du liquide mélangé, et dans lequel le distributeur final inclut une pluralité d'auges (94) adaptées pour transmettre au moins une partie du flux du liquide prédistribué, chaque auge ayant au moins une ouverture (96) et étant en communication fluidique avec au moins un canal du prédistributeur (88).

7. Procédé de distribution d'un flux d'un liquide descendant dans un espace intérieur d'une colonne garnie (62) en utilisant l'appareil selon la revendication 1, le procédé comprenant les étapes suivantes :

l'introduction dans l'espace intérieur de la colonne garnie (62) au-dessus du collecteur (61) disposé dans l'espace intérieur, du flux du liquide descendant dans l'espace intérieur de la colonne garnie (62) ;
la collecte sur le collecteur (61) d'au moins une portion du flux du liquide descendant dans l'espace intérieur de la colonne garnie (62) ;
la transmission vers le bas à travers un premier conduit en communication fluidique avec le collecteur (61) d'au moins une portion du liquide du premier secteur (63) du collecteur (61) à la première zone (65) du mélangeur (64) disposé dans l'espace intérieur en-dessous et espacé du collecteur (61), moyennant quoi le liquide transmis à travers le premier conduit est transposé circonférentiellement du premier secteur (63) du collecteur (61) à la première zone (65) du mélangeur (64) ;
la transmission vers le bas à travers un deuxième conduit en communication fluidique avec le collecteur (64) d'au moins une portion du liquide du deuxième secteur (73) du collecteur (61) à la deuxième zone (75) du mélangeur (64),
moyennant quoi le liquide transmis à travers le deuxième conduit est transposé circonférentiellement du deuxième secteur (73) du collecteur (61) à la deuxième zone (75) du mélangeur (64) ; et
le mélange dans le mélangeur (64) du liquide transmis à la première zone (65) du mélangeur (64) du premier secteur (63) du collecteur (61) avec le liquide transmis à la deuxième zone (75) du mélangeur (64) du deuxième secteur (73) du collecteur (61), produisant ce faisant un liquide mélangé ;
la transmission du mélangeur (64) à un prédistributeur (88) disposé dans l'espace intérieur de la colonne garnie (62), d'au moins une portion du flux du liquide mélangé ; et
la transmission vers l'extérieur depuis le prédistributeur (88) d'au moins la partie du flux reçu du liquide mélangé reçu du mélangeur (64) ;
la réception par un distributeur final disposé dans l'espace intérieur de la colonne garnie (62), d'au moins une portion du flux du liquide prédistribué du prédistributeur (88) ; et
la transmission d'au moins une portion du flux reçu du liquide prédistribué sensiblement uniformément sur au moins une portion de l'aire de section transversale de l'espace intérieur de la colonne garnie (62).

8. Procédé selon la revendication 7, dans lequel le liquide transmis à travers le premier conduit est transposé circonférentiellement du premier secteur (63) du collecteur (61) à la première zone (65) du mélangeur (64) d'environ 60° à environ 180°, et de préférence d'environ 120° à environ 180°, et plus préférablement d'environ 180°.

9. Procédé selon la revendication 8, dans lequel le liquide transmis à travers le deuxième conduit est transposé circonférentiellement du deuxième secteur (73) du collecteur (64) à la deuxième zone (75) du mélangeur (64) d'environ 60° à environ 180°, et de préférence d'environ 120° à environ 180°, et plus préférablement d'environ 180°.

10. Procédé selon la revendication 7,
dans lequel le prédistributeur (88) inclut une pluralité de canaux (90A-90F) adaptés pour transmettre vers le bas au moins une partie du flux reçu du liquide mélangé, et dans lequel le distributeur final inclut une pluralité d'auges (94) adaptées pour transmettre au moins une partie du flux du liquide prédistribué, chaque auge (94) ayant au moins une ouverture (96) et étant en communication fluidique avec au moins un canal (90A-90F) du prédistributeur (88).

11. Appareil selon la revendication 1 ou procédé selon la revendication 7, dans lequel l'aire de section transversale du mélangeur (64) n'occupe pas plus de 20 %, de l'aire de section transversale de l'espace intérieur de la colonne garnie (62).

12. Procédé de séparation d'air cryogénique, comprenant la mise en contact d'une vapeur ascendante et d'un liquide descendant à contre-courant dans une colonne garnie (62) ayant un espace intérieur avec une première section de transfert de masse dans l'espace intérieur et une deuxième section de transfert de masse en-dessous et espacée de la première section de transfert de masse dans l'espace intérieur, dans lequel un appareil (60) selon la revendication 1 positionné entre la première section de transfert de masse et la deuxième section de transfert de masse distribue un flux du liquide descendant de la première section de transfert de masse à la deuxième section de transfert de masse.

FIG. 1
Prior Art

FIG. 2A

FIG. 2B

FIG. 2C

**FIG. 2D**

**FIG. 2E**

**FIG. 2F**

**FIG. 2G**

FIG. 3A

FIG. 5

**FIG. 3B**

**FIG. 3C**

**FIG. 3D**

**FIG. 3E**

FIG. 4A

FIG. 4B

FIG. 7

FIG. 6

Effect of liquid maldistribution with fixed CGAR flow
Example 1: 2 x 35 theoretical stages; L/V = 0.97

Legend:
- Intermediate liquid transposed 180°
- Intermediate liquid transposed 120°
- Intermediate liquid transposed 60°
- Intermediate liquid mixed
- Base case liquid maldistribution

Y-axis: Fractional Stages
X-axis: Flow Lambda

FIG. 8

FIG. 10

FIG. 9

FIG. 11

FIG. 13

CGAR with Fixed Distillate for Flow lambda of 0.08
Effect of angle by which intermediate liquid is transposed

FIG. 12

Effect of liquid maldistribution with fixed GOX flow
Example 2:2 x 20 theoretical stages; L/V = 1.40

Legend:
- ◆--- Intermediate liquid transposed 180°
- ✳--- Intermediate liquid transposed 120°
- ●--- Intermediate liquid transposed 60°
- ■ Intermediate liquid mixed
- ▲-- Base case liquid maldistribution

Y-axis: Fractional Stages

X-axis: Flow Lambda

FIG. 14

**EP 2 790 804 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5158713 A, Ghelfi
- US 5776316 A, Potthoff
- US 5752538 A, Billingham
- US 5935389 A, Hine
- US 7114709 B, Ender
- US 20090049864 A, Kovak
- US 5240652 A, Taylor
- US 5897748 A, Kaibel
- US 6086055 A, Armstrong
- US 7007932 B, Armstrong
- EP 1323467 A1, Manteufel
- DE 1113680, Schwanitz
- US 20090049864 A1, Kovak